# FASCICULE DE BREVET EUROPEEN

(11) **EP 1 723 398 B1**
(45) Date de publication et mention de la délivrance du brevet: **03.03.2010**
(21) Numéro de dépôt: 05737002.5
(22) Date de dépôt: 04.03.2005
(51) Int. Cl.: G01J 3/50, G06K 7/10, B41F 33/00

(54) **APPAREIL ET PROCEDE ASSOCIE PERMETTANT LE CONTRÔLE DE LA QUALITE CALORIMETRIQUE DE TOUT DOCUMENT IMPRIME**
EINRICHTUNG UND VERFAHREN ZUR STEUERUNG DER KALORIMETRISCHEN QUALITÄT EINES BELIEBIGEN GEDRUCKTEN DOKUMENTS
DEVICE AND METHOD FOR CONTROLLING THE CALORIMETRIC QUALITY OF ANY PRINTED DOCUMENT

(30) Priorité: 06.03.2004 FR 0402380
(43) Date de publication de la demande: 22.11.2006
(73) Titulaire: Meffre, Wilfrid, 91430 Igny (FR)
(72) Inventeur: Meffre, Wilfrid, 91430 Igny (FR)
(74) Mandataire: Sauvage, Renée
(86) Numéro de dépôt international: PCT/FR2005/000523
(87) Numéro de publication internationale: WO 2005/088265

(56) Documents cités:
- WO-A-01/57485
- DE-A- 19 633 557
- FR-A- 2 698 982
- US-A- 3 684 868

## Description

La présente invention concerne un nouvel Appareil de contrôle et son procédé d'utilisation associé pour l'assurance de la qualité colorimétrique des documents photographiques et productions imprimées de toutes natures, produits sur n'importe quel type d'imprimante, presse d'imprimerie, machine d'impression textile ou par sérigraphie, imageuse ou tireuse photographique en utilisant tous types d'encres, de pigments photographiques ou de toners, sur tous types de papiers, cartons, textiles ou autres médias supportant le document. Les contrôles qualité concernés s'étendent bien entendu aux systèmes de gravure directe de plaques offset, qui peuvent être considérés comme des imprimantes monochromes.

Les différents dispositifs de production couleur ou monochromes de toutes sortes concernés par cette invention, à partir de fichiers informatiques de toutes sortes, seront nommés ci-après sous le terme générique de « machine de production ». Le verbe « imprimer » désignera aussi bien la production de document par impression couleur classique avec un nombre quelconque de couleurs primaires, que toute autre méthode de production de documents de type photographique ou autre.

L'intérêt industriel de cette invention est de permettre à toute Personne ayant entre les mains un document couleur ou monochrome de s'assurer facilement et rapidement de sa conformité spectrale, colorimétrique ou densitométrique à un standard arbitraire, même si cette Personne ignore tout du procédé de fabrication, de l'origine et de l'usage du document. Par conformité densitométrique nous entendons aussi bien la vérification par rapport à un standard arbitraire des densités optiques ou surfaces tramées apparentes mesurées par des spectrophotomètres ou des densitomètres optiques, que la vérification des surfaces tramées géométriques estimées par des spectrophotomètres ou des densitomètres optiques.

Le nouvel Appareil de contrôle proposé est un spectrophotomètre par réflexion amélioré, car cet équipement possède aujourd'hui le plus gros marché potentiel d'utilisation industrielle en Arts Graphiques et en Photographie. De plus ce type de spectrophotomètre remplace progressivement sur ces marchés les anciens densitomètres et colorimètres à filtres colorés ou interférentiels, voués à disparaître.

L'usage de ce nouvel Appareil de contrôle fait appel à un nouveau procédé qui permet à tout Utilisateur d'une machine de production, même s'il n'est pas équipé de l'Appareil de contrôle mais seulement d'autres instruments de mesures, (spectrophotomètres, colorimètres ou densitomètres), de mieux gérer au quotidien la qualité de ses machines de production tout en participant à la création et à l'enrichissement d'une base de donnée mondialement accessible, permettant à toute autre Personne ayant en main un échantillon de la production (et à l'Utilisateur lui-même) d'en réaliser un contrôle qualité de manière rapide et fiable au moyen de l'Appareil de contrôle.

Tout Utilisateur compétent d'une machine de production peut en effet se voir attribuer un identificateur alphanumérique unique au monde, pour toute configuration arbitraire d'une machine de production conduisant à une réponse chromatique arbitraire (spectres de réflexions ou couleurs obtenues en fonction des valeurs du fichier imprimé) qui soit considérée par cet Utilisateur compétent comme souhaitable et à retenir pour certaines productions.

Cet identificateur unique caractérise à la fois une configuration arbitraire d'une machine de production et l'ensemble des caractéristiques et conditions de mesure de l'ensemble des gammes de contrôle qui y sont attachées. Il est alors représenté sur le document à côté de la (ou des) gamme(s) de contrôle choisie(s) ou conçue(s) par l'Utilisateur compétent de la machine de production.

Ceci permet à tout Utilisateur de l'Appareil de contrôle d'établir un diagnostic d'acceptation ou de rejet d'une production par interrogation automatique de la base de données mondialement accessible, des procédés étant prévus au cas où cette base de données mondiale n'est pas accessible.

Ceci lui permet aussi d'obtenir de nombreuses autres informations utiles à l'usage de cette production, telles que par exemple les coordonnées de son fabricant ou encore les profils colorimétriques (de type I.C.C. par exemple) attachés aux différents éléments composant le document, ou encore le profil colorimétrique de la machine de production utilisée.

Une gamme de contrôle est constituée par un ensemble de plages colorées uniformes, souvent imprimées de manière adjacente. Elle est imprimée en marge du document ou séparément si la place n'est pas disponible en marge du document. Cette gamme est spécifiée par un fichier informatique mémorisant la valeur de chaque plage colorée (spécifiée par exemple par une valeur type RVB et/ou CMJN et/ou CMJNOV et/ou C.I.E. XYZ, en fonction du type de données acceptées par la machine de production), ses dimensions géométriques, et plus généralement toutes les informations permettant d'imprimer cette gamme. Ces valeurs numériques spécifiant la gamme sont fixes, arbitraires, et plus ou moins bien adaptées au contrôle qualité des documents produits selon l'expertise de leur créateur ou Utilisateur, qui peut être une Personne morale ou physique.

Après les avoir prévues par calcul en fonction du profil colorimétrique de la machine de production (par exemple un profil I.C.C. tel que défini par l'International Color Consortium et réalisé dans les règles de l'Art à partir de la mesure spectrale ou colorimétrique de mires de couleurs), ou bien les avoir mesurées statistiquement sur un ou plusieurs imprimés de référence lors d'un test de production, l'Utilisateur de la machine de production connaît par avance les valeurs spectrales, colorimétriques ou densitométriques qu'on devra mesurer sur chaque plage colorée de la (ou des) gamme(s) de contrôle imprimée(s) et les tolérances raisonnables à retenir, si le document a été produit correctement, ou plus précisément si la machine de production utilisée fonctionnait bien, c'est à dire conformément à ses spécifications ou à un standard d'étalonnage arbitrairement choisi, lors de l'impression de ce document.

Chaque configuration d'utilisation arbitraire d'une machine de production demande donc une ou plusieurs gammes de contrôle, chacune étant spécifiée par un fichier informatique, et par un jeu associé de valeurs de référence spectrales, colorimétriques ou densitométriques accompagné de l'ensemble de tous les paramètres définissant les conditions de mesure ayant permis d'établir ce jeu de valeurs : par exemple illuminant et angle de vision pour les calculs colorimétriques, réponse spectrale pour les calculs densitométriques, type et marque d'Appareil de mesure utilisé, filtrage optique éventuel de sa source lumineuse, géométrie de mesure, tolérances d'acceptabilité etc.

Par exemple, il est d'usage sur les presses offset d'imprimerie utilisées en quadrichromie d'imprimer au moins les quatre encres primaires Cyan, Magenta, Jaune et Noire pures, avec les valeurs tramées 100% (à-plat de densité), 75%, 50%, 25%, 40% et 80%. Un contrôle densitométrique (par exemple) de ces plages uniformes constituant la gamme de contrôle imprimée en marge parallèlement aux vis d'encriers, témoigne alors du respect de la quantité d'encre primaire par unité de surface déposée sur le papier pour chaque encre primaire et à chaque densité spécifiée, et ceci, ce qui est particulier aux presses offset, pour chaque bande d'encrage perpendiculaire aux vis d'encrier. Les densités, couleurs ou spectres de référence et les conditions de mesure de chaque plage colorée ainsi que les tolérances d'acceptabilité peuvent être fixées par l'Utilisateur expert de la presse d'imprimerie ou bien par des organismes de normalisation publics ou privés, nationaux ou internationaux. Pour une presse offset dans une configuration donnée, une gamme complémentaire peut être utile pour le contrôle de chaque plaque offset.

Quelle que soit la configuration de production, son contrôle de qualité colorimétrique demande au minimum la vérification du bon état de réglage de la machine en conformité à un état de réglage arbitraire choisi ou existant, par une gamme de contrôle principale (contrôle de la constance de reproduction des couleurs), et parfois en plus la vérification de la conformité des couleurs effectivement reproduites par rapport à un standard de couleur arbitrairement choisi (contrôle de la précision des couleurs reproduites, par exemple sur une épreuve numérique contractuelle obtenue par simulation sur une imprimante des couleurs qu'on obtiendrait sur presse offset de réponse chromatique connue).

La gamme de contrôle principale reste celle permettant de vérifier la conformité de la machine de production à une réponse chromatique arbitraire. Cette gamme permet par exemple de vérifier la colorimétrie de chaque couleur primaire à sa densité maximale, la colorimétrie de certaines couleurs obtenues par superposition de deux ou plusieurs de ces couleurs primaires, la colorimétrie du support du document. Cette gamme peut aussi s'appuyer sur la vérification de la conformité des densités de chaque couleur à des niveaux de référence spécifiés arbitrairement, les densités étant mesurées selon une réponse spectrale normalisée usuelle ou adaptée spécifiquement à la couleur primaire mesurée.

Sur le plan des contrôles densitométriques précisons qu'en fonction de la machine de production utilisée, il n'est pas toujours possible d'imprimer les couleurs primaires pures : par exemple sur une imprimante personnelle à jet d'encre, on ne peut pas imprimer une gamme représentant l'encre cyan pure à différentes densités, puisque l'imprimante n'accepte que des données RVB et réalise la conversion RVB vers CMJN de manière interne : dans ce cas la gamme de contrôle permettant de vérifier la constance des couleurs reproduites sera spécifiée par un ensemble de valeurs arbitraires RVB, et le fichier de référence sera un fichier de mesure des couleurs produites, mesurées par leurs spectres de réflexion ou leurs couleurs apparentes sous un illuminant donné.

Et si cette imprimante personnelle à jet d'encre est utilisée pour produire la simulation d'un bon à tirer de type « cromalin » par exemple, une seconde gamme de contrôle sera nécessaire (ou du moins souhaitable), pour vérifier qu'un échantillon de couleurs définies par des valeurs quadri CMJN est effectivement reproduit par l'imprimante avec des couleurs identiques à celles qu'on obtiendrait sur le bon à tirer à partir de ces valeurs CMJN.

Il est donc toujours possible de définir une gamme de contrôle permettant de vérifier la constance des couleurs reproduites, et une ou plusieurs gammes complémentaires souhaitables, et les principes généraux décrits ici sont donc toujours applicables, même s'il n'est pas possible d'expliciter ici toutes les variantes possibles pouvant conduire aux spécifications d'une ou plusieurs gammes de contrôle pour une configuration de production.

Le principe des méthodes de contrôle utilisées aujourd'hui est insuffisant, car d'une part il est très mal compris et peu mis en oeuvre à ce jour ou du moins très partiellement (une seule gamme de contrôle est en général utilisée même quand la configuration d'impression en demanderait d'autres), et surtout il n'est utilisable en pratique par un Utilisateur ou Client du document que si celui-ci connaît les valeurs de référence associées à la gamme de contrôle imprimée en marge du document.

Cette situation est tout à fait inadaptée à la multiplication des machines de production couleur ou monochromes disponibles sur le Marché et à la variété des usages techniques et commerciaux qui en sont faits aujourd'hui : même lorsqu'il reçoit un imprimé muni de gamme(s) de contrôle et qu'il en mesure les valeurs spectrales, colorimétriques ou densitométriques, l'Utilisateur du document n'a en pratique aucune idée des valeurs de référence à utiliser pour la vérification du document et souvent il ne connaît même pas les conditions de mesures ou les tolérances.

En effet, d'une part ces valeurs de référence ne sont pas forcément des valeurs fixées, ni même déterminables en pratique, par un organisme de normalisation. Il peut s'agir par exemple d'un imprimé produit sur une machine de production grand format du commerce utilisée avec des pilotes, des encres et un papier inconnus de l'Utilisateur du document. Dans ce cas seul l'Utilisateur compétent de la machine de production a pu définir ou choisir la gamme de contrôle permettant la vérification du bon fonctionnement de la machine de production, puis déterminer les valeurs de références associées, dans le cadre de la politique de qualité couleur interne à son Entreprise, et inconnue de l'Utilisateur du document. Et pour une même gamme de contrôle créée ou choisie, chaque machine de production nécessite la création de plusieurs jeux distincts de valeurs de référence, en fonction de chaque combinaison (encre + média + standard d'étalonnage retenu), et aussi en fonction de l'usage qui est fait de la machine de production (simulation d'un original scanné, d'un écran, d'une autre machine de production, d'une presse offset etc.).

Et d'autre part les organismes de normalisation agissant dans le domaine de l'imprimerie offset en quadrichromie publient un jeu de valeurs colorimétriques ou densitométriques de référence pour chaque grand type de papier utilisé en offset, mais ces papiers ne sont pas forcément identifiables sans erreur par l'Utilisateur ou le Client du document. Par exemple, rien que pour le contrôle des épreuves numériques produites pour simuler les presses offset utilisées en quadrichromie, la FOGRA allemande a défini à ce jour, en fonction de grands types de papier et de plaques offset simulés, plusieurs dizaines de jeux de valeurs de références colorimétriques distincts (en C.I.E. Lab D50) pour sa gamme arbitraire Fogra MediaWedge 2, qui est spécifiée par un même jeu de valeurs numériques arbitraires de type CMJN (46 plages colorées réparties sur deux lignes de 23 plages adjacentes, et mesurables en quelques secondes par un simple spectrophotomètre manuel opérant par balayage continu de chacune des deux lignes). Ce type de norme impose de plus à l'imprimeur une normalisation des encres CMJN utilisées en quadrichromie, pour pouvoir limiter le nombre de jeux de valeurs de référence à publier, ce qui ne va pas forcément dans le sens du progrès et de la souplesse : on a exhumé une vieille norme pour les encres offset qui n'avait jamais été appliquée, au moment même où la technologie permettrait plus de souplesse et peut être l'usage de meilleures encres.

Enfin, même le fabricant du document, qui utilise souvent de nombreuses machines de production différentes, avec de nombreux types d'encres et de supports, peut se tromper facilement lorsqu'il reprend un ancien document archivé qu'il a imprimé depuis longtemps : il a du mal à retrouver sans erreur les valeurs de référence à mesurer sur sa (ou ses) propre(s) gamme(s) de contrôle, (par exemple pour vérifier si les couleurs ne se sont pas dégradées dans le temps à cause du vieillissement des pigments ou du support), car ces valeurs de référence dépendent à la fois du modèle de la machine de production, de sa version de « firmware » (logiciel interne à la machine) ou de mise à jour matérielle, de la version des pilotes logiciels ou du RIP PostScript utilisé (logiciel convertissant un fichier décrivant un document par des données de type images et des données de type vectoriel décrivant les caractères et les dessins au trait), du type et de la marque des encres primaires utilisées, du type et de la marque de média d'impression utilisé : la simple combinatoire fait qu'une Entreprise peut avoir plusieurs centaines de rendus chromatiques standards distincts en fonction des applications, qui nécessiteront autant de jeux distincts de valeurs de référence pour la vérification d'une seule gamme de contrôle spécifiée arbitrairement.

En conséquence il est clair qu'il devient indispensable que chaque Utilisateur de la machine de production soit en mesure de spécifier ou choisir par lui-même une ou plusieurs gammes de contrôle adaptées spécifiquement à chaque configuration d'usage de chacune de ses machines de production, et puisse produire des documents comportant en marge non seulement ces gammes de contrôle adaptées, mais aussi le moyen de permettre à tous d'en connaître l'ensemble des spécifications techniques utiles au contrôle qualité : au minimum les valeurs de référence à mesurer sur cette (ou ces) gammes, les tolérances d'acceptabilité et toutes les informations liées aux conditions de mesure.

Pour répondre aux nouveaux besoins exprimés, l'Appareil de contrôle objet de la présente invention est donc constitué d'un spectrophotomètre par réflexion, modifié pour autoriser, en plus des mesures usuelles (spectres, couleurs, densités), la lecture de codes à barres, autorisant ainsi la vérification colorimétrique rapide et sure de tout document par toute Personne ayant en main ce document.

Ce code à barres, imprimé en même temps que la (ou les) gamme(s) de contrôle nécessaire ou souhaitable(s), représente un identificateur alphanumérique unique au monde spécifique à une configuration purement arbitraire de la machine de production ayant produit le document, et cet identificateur unique permet de retrouver automatiquement toutes les données de référence nécessaires, dont au minimum les valeurs de référence à mesurer sur cette (ou ces) gammes, les tolérances d'acceptabilité et toutes les informations liées aux conditions de mesure.

Bien d'autres informations concernant la réalisation ou l'utilisation du document, telles que par exemple le (ou les) profils colorimétriques (de type I.C.C. par exemple) associé(s) aux éléments (texte, trait, images) composant le document peuvent être très utiles à l'Utilisateur d'un document, si bien que l'enregistrement de la base de données mondiale indexée par l'identificateur unique pourra contenir de très nombreuses autres informations utiles.

Après lecture et décodage par l'Appareil de contrôle, celui-ci interroge automatiquement la base de données mondiale accessible par connexion à un réseau informatique mondial privé ou public de type Internet, au besoin via un ordinateur local. Cette base de données mémorise pour chaque valeur d'un identificateur unique déjà attribué, la (ou les) spécification(s) de la (ou des) gammes de contrôle présente(s), et le (ou les) jeu (x) associé(s) de valeurs de référence et plus généralement toutes les informations utiles au contrôle qualité ou au bon usage du document.

Tout Utilisateur compétent (Personne morale ou physique) créant ou choisissant, pour une de ses machines de production dans une configuration d'usage arbitraire, une ou plusieurs gammes de contrôle complémentaires, et déterminant ou choisissant pour chaque gamme un jeu de valeurs de références (spectres ou couleurs ou densités) peut demander un identificateur unique spécifique et enrichir par un nouvel enregistrement la base de donnée mondiale qui mémorise alors toutes les caractéristiques des gammes associées par l'Utilisateur compétent à cet identificateur.

La base de données peut aussi être enrichie par les organismes de normalisation agissant dans le domaine de l'imprimerie et par les fabricants de systèmes de production de documents de toute nature souhaitant rationaliser le fonctionnement de leurs équipements pour le bénéfice de leurs Utilisateurs, ou pour de la maintenance ou du support technique local ou distant ou pour la création de services à valeur ajoutée.

La base de données mondiale, unique ou distribuée, est sous contrôle d'un programme de synchronisation, qui attribue et gère les identificateurs alphanumériques uniques.

Toute modification d'une des gammes de contrôle liée à la configuration d'impression, ou l'ajout d'une gamme de contrôle supplémentaire, ou toute modification des conditions de mesure d'une des gammes entraîne la nécessité d'utiliser un nouvel identificateur unique et de redéfinir le nouveau jeu de gammes de contrôle complet associé à ce nouvel identificateur.

Chaque identificateur unique peut être transmis au demandeur sous toute forme pratique : par exemple image bitmap ou vectorielle d'un code à barres selon un codage arbitraire et sous toute forme de fichier informatique usuel ou à venir, ou encore l'identificateur lui-même, sous toute forme de codage arbitraire ou de représentation, permettant à un programme informatique local téléchargeable d'imprimer cet identificateur sous forme d'un code à barres selon tout codage arbitraire, ou de créer un fichier informatique imprimable de toute nature, représentant l'identificateur sous forme d'un code à barres selon un codage arbitraire. Ce code à barres ou tout représentant de l'identificateur unique selon tout codage arbitraire est incorporable aux documents à imprimer ou au programme informatique générant ou assemblant le document ou à la machine de production ou à son pilote logiciel, en vue d'une impression sous forme d'un code à barres au coté de la (ou des) gamme (s) de contrôle en marge du document, lorsque la machine de production imprime dans la configuration d'impression pour laquelle l'Utilisateur a créé cette (ou ces) gamme(s) de contrôle.

Cette base de données mondiale peut au besoin être distribuée en tout ou partie dans chaque Entreprise sur un serveur local Intranet ne stockant localement que les données nécessaires aux besoins courant du producteur du document, de ses partenaires, Fournisseurs et Clients. Ce serveur local est alors synchronisé sur un ou plusieurs serveurs de type Internet eux-mêmes synchronisés, qui hébergent la base de données globale accessible dans le monde entier.

Le serveur local peut aussi stocker des identificateurs uniques attribués par avance par le programme distant gérant les identificateurs uniques et synchronisant l'ensemble des bases de données.

La base de données indexée par les identificateurs uniques mémorisant les gammes de contrôle et les valeurs de références attachées à chaque configuration d'impression arbitraire régulièrement utilisée par le producteur du document, ses Partenaires ou ses Clients, peut aussi être transmise en tout ou partie par toute connexion usuelle de type filaire, hertzienne ou infrarouge à l'Appareil de contrôle objet de cette invention qui peut ainsi mémoriser localement les spécifications, les valeurs de référence, les conditions de mesure et les tolérances associées à chaque gamme de contrôle ou jeu de gammes de contrôle associé à tout identificateur unique.

Ceci permet à l'Appareil de contrôle de travailler de manière autonome lorsqu'aucune connexion n'est possible aux bases de données Intranet ou Internet distantes. Le spectrophotomètre peut alors accepter ou rejeter de manière autonome et non connectée le document contrôlé, par usage d'un programme informatique interne utilisant sa base de données interne.

Compte tenu que la gamme de contrôle principale bien conçue d'une machine de production destinée à en vérifier la stabilité de réponse chromatique peut toujours être constituée de quelques plages colorées bien choisies caractérisées par des densités ou des couleurs apparentes de référence sous un illuminant normalisé, des codes à barres complémentaires pourront être fournis au besoin à l'Utilisateur en plus de l'identificateur unique, qui coderont directement les valeurs colorimétriques et/ou densitométriques de référence de ces plages de contrôle stratégiques, permettant à l'Appareil de contrôle la lecture directe de ces valeurs de référence codées sous forme de codes à barres pour établir un diagnostic en l'absence de toute réponse d'une base de donnée interne ou distante.

C'est sur ce dernier point que l'usage de codes à barres mono dimensionnels couleur peut être intéressant, quoique non indispensable : permettre le codage direct sur le document d'une plus grande quantité d'informations de référence utilisables directement par l'Appareil de contrôle sans connexion à la base de données mondiale, un code à barre linéaire monochrome étant largement suffisant pour le codage de chaque identificateur unique.

Ajoutons enfin que le programme distant ou répliqué sur un serveur local Intranet permettant à tout Utilisateur compétent de définir pour une configuration de production l'ensemble des éléments, et permettant par Tous le contrôle qualité colorimétrique, peut fournir de l'aide et des services à valeur ajoutée à cet Utilisateur compétent pour la spécification de gammes de contrôle bien adaptées, pour la détermination de leurs valeurs de références à partir de profils colorimétriques ou des fichiers de mesure ayant permis d'établir ces profils, et pour toute action nécessaire en cas d'écarts anormaux entre les valeurs de références éventuellement prévues par calcul ou mesurée en test de production, et les valeurs effectivement mesurées lors de l'essai en production final destiné à valider l'enregistrement de la configuration de production, cette validation permettant d'obtenir l'identificateur unique.

Cette aide pourra bien sûr aussi être fournie si des écarts anormaux sont constatés par la suite au cours d'une production entre les mesures de la (ou des) gammes(s) de contrôle et leurs valeurs de références enregistrées dans la base de donnée.

Plusieurs versions de l'Appareil de contrôle peuvent être réalisées : des versions sans écran d'affichage destinées à une utilisation connectée par toute connexion informatique usuelle de type filaire, hertzienne ou infrarouge, et des versions comprenant en plus un dispositif d'affichage à cristaux liquides, diode électroluminescente rouge/orange/verte ou autre ainsi qu'un logiciel de prise de décision intégré. Toutes les versions peuvent être munies d'un transducteur sonore délivrant des indications : par exemple début et fin de mesure, décodage d'un code à barres réussi ou non, interrogation en cours d'une base de données distante, acceptation ou rejet du document.

Un simple code à barres de type mono dimensionnel monochrome lisible en balayage à l'aide d'un simple crayon optique permet de coder de manière sûre un très grand nombre de combinaisons, nombre suffisamment grand pour que chaque configuration d'impression arbitraire définie par tout Utilisateur puisse bien se voir attribuer un identificateur unique au monde. Par exemple un code à barres de 24 caractères alphabétiques utiles en Codage 128 avec une largeur des barres étroites d'environ 0,25 mm s'imprime sur une longueur de 75 mm, zones de silence (plages vierges de part et d'autre du code à barres) non comprises.

Et puisque les gammes de contrôle peuvent aujourd'hui être mesurées rapidement en balayage avec un spectrophotomètre moderne manuel (déplacement manuel le long d'une règle) ou automatique (déplacement sur un rail pour lecture en bordure du document ou déplacement sur une table de mesure. XY), il est logique (ou du moins très simple et très peu coûteux) d'utiliser un code à barres mono dimensionnel pour lire également par un balayage linéaire le code à barres avec l'Appareil de contrôle objet de cette invention.

Il existe de très nombreuses manières de permettre à un spectrophotomètre la lecture de codes à barres, la plus simple consistant à ajouter au corps du spectrophotomètre un dispositif classique de lecture de code à barres par contact ou à distance du commerce. Les mesures spectrales de plages colorées exigent en effet, pour une bonne précision, un positionnement géométrique précis de l'ouverture de mesure du spectrophotomètre par rapport au plan du document, et ce positionnement précis peut convenir parfaitement à la lecture des codes à barres à l'aide de dispositifs simples et classiques.

L'usage d'une ou plusieurs diodes laser avec optique(s) de collimation de fréquences d'émission distinctes, associée(s) à un ou plusieurs capteurs photosensibles filtrés au besoin détectant la lumière réfléchie, permet la lecture sans contact de codes à barres linéaires monochromes ou couleur, un code à barres couleur pouvant être constitué par plusieurs codes à barres imprimés en superposition, chacun étant imprimé avec une couleur complémentaire de la couleur du laser utilisé pour sa lecture.

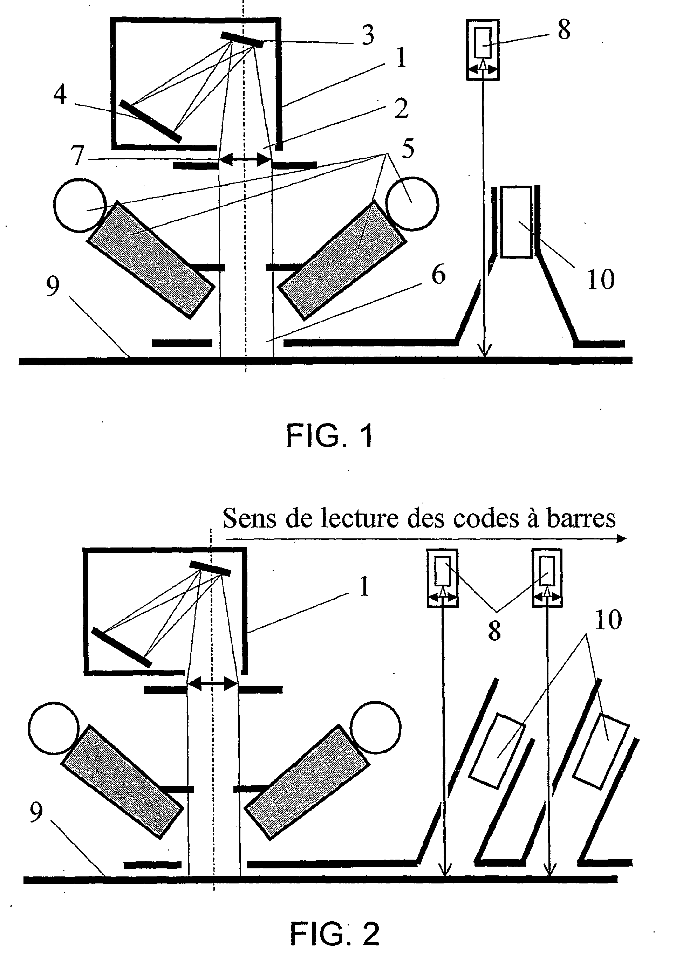

Selon la figure 1 un spectrophotomètre peut recevoir par exemple une diode laser (8), munie d'un élément photosensible collimaté analysant la lumière réfléchie par le plan du document (9) lors de la lecture du code à barres.

L'utilisation d'au moins trois couleurs primaires Cyan, Magenta et Jaune pour la très grande majorité des documents couleur classiques imprimés ou photographiques à contrôler, permet la lecture simultanée de trois codes à barres indépendants mono dimensionnels imprimés en superposition, chacun étant imprimé avec l'une des trois couleurs primaires (ou pigment photographique) Cyan, Magenta et Jaune, utilisée à sa densité maximale pour un bon contraste de lecture.

On utilisera alors trois diodes laser rouge, verte, et bleue. (NB : quand les diodes laser vertes existeront, nous y reviendrons). Il n'est pas indispensable pour la lecture des codes à barres que les trois faisceaux lumineux convergent parfaitement sur un même point du plan de lecture, si leurs spectres d'émission respectifs ne se recouvrent pas ou peu, et ceci permettra au besoin des coûts de fabrication peu élevés ainsi qu'une bonne profondeur de champs pour la lecture de codes à barres couleur ainsi constitués.

Le code à barre imprimé avec une couleur cyan provoque un contraste dans les longueurs d'onde rouges. Le code à barre imprimé avec une couleur magenta provoque un contraste dans les longueurs d'onde vertes. Le code à barre imprimé avec une couleur jaune provoque un contraste dans les longueurs d'onde bleues. Un tel dispositif reste adapté à la lecture des codes à barres linéaires classiques imprimés en noir sur fond clair (par exemple en n'utilisant que le canal rouge). Cependant les encres d'imprimerie offset Cyan et Magenta n'étant pas fameuses (le Cyan réfléchit mal les bleus à 400 nm), il faut prendre des précautions sur le choix de la longueur d'onde de la diode laser bleue qui ne doit pas être trop proche de l'ultraviolet mais aux environs de 450 nm.

Les trois tensions électriques correspondant à ces trois canaux de lecture indépendants, et produites par trois groupes distincts d'éléments de la barrette photosensible, sont traitées chacune de manière indépendante et simultanée, comme les trois sorties de trois lecteurs de codes à barres monochromes agissant indépendamment.

Comme les diodes laser vertes n'existent pas encore à ce jour (il n'existe à ce jour que des composants optoélectroniques composites un peu encombrants et complexes produisant une lumière laser verte par le pompage optique d'un cristal par une diode laser non verte), une telle réalisation ne peut être pratique et économique à ce jour qu'en utilisant une diode laser rouge et une bleue, autorisant alors l'usage de deux codes à barres imprimés en superposition : un cyan et un jaune.

Selon la figure 2 un spectrophotomètre peut recevoir par exemple deux diodes laser de longueurs d'onde distinctes (8), chacune étant munie d'un élément photosensible collimaté analysant la lumière réfléchie par le plan du document (9) lors de la lecture du code à barres. Le décalage physique entre les deux spots lors d'un déplacement de gauche à droite ou de droite à gauche n'est pas gênant, car chaque lecteur de code à barres ainsi constitué se comporte de manière indépendante, car il ne « voit » que la couleur primaire qui lui est affectée dans le code à barres couleur.

Le spectrophotomètre par réflexion que cette invention vient améliorer peut être composé de plusieurs éléments distincts pouvant constituer plusieurs configurations distinctes :
- un analyseur spectral à réseau comportant l'ouverture d'entrée de la lumière, un réseau de diffraction dispersant la lumière par réflexion et une barrette d'éléments photosensibles mesurant l'intensité de la lumière diffractée sur chaque bande de longueurs d'onde visible ou proche du visible.
- ou bien un analyseur spectral à filtres utilisant pour la mesure des spectre lumineux un jeu de filtres à bande étroite montés sur une tourelle en rotation devant un capteur photosensible fixe mesurant chaque bande du spectre lumineux à travers les filtres successifs.
- un illuminateur destiné à éclairer en lumière blanche la plage colorée à mesurer sur une certaine surface. La source lumineuse peut être un (des) flash(s), une ou plusieurs ampoules à incandescence, une ou plusieurs diodes électroluminescentes blanches ou toute autre source lumineuse à spectre visible et proche ultraviolet continu, suffisante ou souhaitable pour l'application.
- selon les conditions usuelles recommandées par la CIE la géométrie d'éclairement de l'illuminateur peut être de types usuels 45/0°, 0/45° ou de type diffus Diffus/0 ou 0/Diffus.
- une ouverture de mesure définissant la zone illuminée du document dont le spectre de réflexion sera mesuré dans ces conditions,
- la lumière réfléchie par la plage colorée illuminée peut être transmise à l'analyseur spectral pour être mesurée soit par une simple ouverture collimatée sans optique, soit par un système optique, ou encore par un conducteur de lumière souple ou rigide.
- la surface éclairée par l'illuminateur est en général constituée d'un cercle de 3 à 15 mm de diamètre, en fonction des applications.

La Figure 1 illustre un spectrophotomètre à géométrie 45/0°, avec un analyseur spectral (1) recevant la lumière par l'entrée (2) diffractée par un réseau réflectif (3) vers la barrette d'éléments photosensibles (4). Le document est éclairé par l'ouverture de mesure (6) au moyen d'un illuminateur à 45° (5), le plan du document se situant en (9).

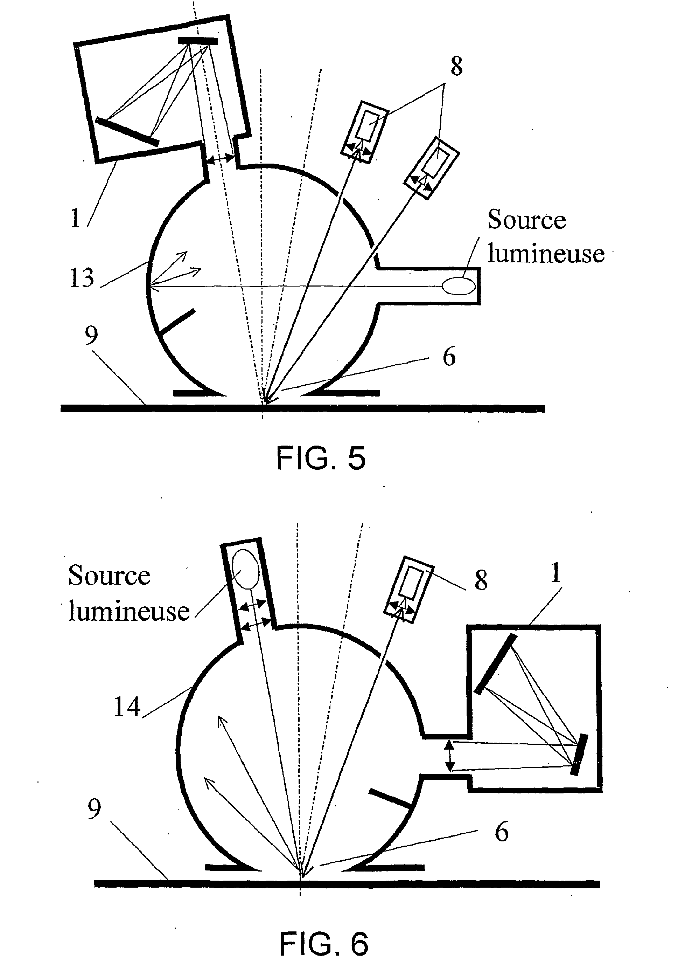

La Figure 5 illustre un spectrophotomètre à géométrie Diffus/0, avec un analyseur spectral à réseau de diffraction et barrette (1). Le document est éclairé par l'ouverture de mesure (6) au moyen de l'illuminateur à sphère (13), le plan du document se situant en (9).

La Figure 6 illustre un spectrophotomètre à géométrie 0/Diffus, avec un analyseur spectral à réseau de diffraction et barrette (1). Le document est éclairé par l'ouverture de mesure (6) au moyen de l'illuminateur à sphère (14), le plan du document se situant en (9).

La Figure 7 illustre un spectrophotomètre à géométrie 0/45°, avec un analyseur spectral à réseau de diffraction et barrette (1). Le document est éclairé par l'ouverture de mesure (6) au moyen d'un illuminateur à 0° (15), le plan du document se situant en (9).

La Figure 8 illustre un spectrophotomètre à géométrie 45/0°, avec un analyseur spectral à filtres passe bande (16) analysant chaque bande du spectre par une tourelle de filtres en rotation (17) et un d'élément photosensible (18). Le document est éclairé par l'ouverture de mesure (6) au moyen d'un illuminateur à 45°, le plan du document se situant en (9).

Les dispositifs ci-dessus peuvent être adaptés à la mesure rapide de plages colorées successives adjacentes par balayage manuel continu et suffisamment régulier. En effet la fréquence de mesure élevée autorisée, (par exemple plusieurs dizaines à plusieurs centaines de mesures de spectres de réflexion complets par seconde mesurés sur 32 bandes dans le cas d'un analyseur spectral à réseau utilisé avec des diodes photosensibles fonctionnant simultanément en parallèle), autorise l'enregistrement de plusieurs spectres de réflexion complets pour une même plage colorée lors d'un déplacement en balayage suffisamment régulier à une vitesse de quelques centimètres ou dizaines de centimètre par seconde. L'obtention durant le balayage de plusieurs spectres complets bruts successifs très proches en valeurs numériques signifie que le cercle d'illumination n'est pas « à cheval » sur deux plages colorées adjacentes et que la moyenne de ces spectres successifs bruts très proches peut donc être retenue comme une mesure spectrale valide de la plage colorée en cours de mesure, ce spectre brut mesuré en valeur moyenne étant ensuite étalonné par une linéarisation effectuée pour chaque bande de longueurs d'onde mesurée (soustraction des courants d'obscurité et mise à l'échelle par un facteur de gain, les deux coefficients étant déterminés lors d'un étalonnage préalable d'une mesure intégrée sans illumination puis par la mesure d'une céramique interne ou externe à l'Appareil dont le spectre de réflexion est connu par avance).

La présente invention propose en plus d'utiliser l'analyseur spectral existant du spectrophotomètre ou l'ouverture de mesure existante pour autoriser, en plus des mesures spectrale usuelles, la lecture rapide et fiable des codes à barres mono dimensionnels.

Pour la lecture des codes à barres, une diode laser munie d'une optique de collimation est utilisée de manière à former dans le plan du document un spot lumineux de dimension adaptée à la lecture des codes à barres linéaires. Au besoin l'optique associée à la diode laser est utilisée pour ajuster une divergence ou une convergence du faisceau en fonction de la présence d'optiques rencontrées sur le chemin optique qui sont destinées au fonctionnement des mesures spectrales. La position de conformation du spot choisie correspond bien entendu à la position prévue du plan du document pour la mesure des spectres de réflexion par le spectrophotomètre. Une profondeur de champs peut être obtenue en pratique pour la formation du spot ce qui permet au besoin la lecture par balayage manuel ou automatique des codes à barres sans contact physique entre l'ouverture de mesure du spectrophotomètre et le document.

Pour la lecture en balayage des codes à barres mono dimensionnels classiques imprimés en noir sur fond blanc, une seule diode suffit : par exemple une diode laser rouge classique émettant à 650 nm. Pour les codes à barres couleur plusieurs diodes laser de longueurs d'ondes distinctes seront utilisées.

Si l'analyseur spectral utilise un réseau de diffraction, la lumière réfléchie collectée lors de la lecture du code à barres est orientée par le réseau de diffraction vers le (ou les) capteur(s) photosensibles existants destinés à la mesure de la lumière réfléchie sur cette longueur d'onde lors de l'usage classique du spectrophotomètre. La variation possible de longueur d'onde d'émission du laser due à des dérives de température n'est pas gênante si on additionne les signaux électriques d'un nombre suffisant d'éléments photosensibles définissant une gamme de longueurs d'ondes adaptées.

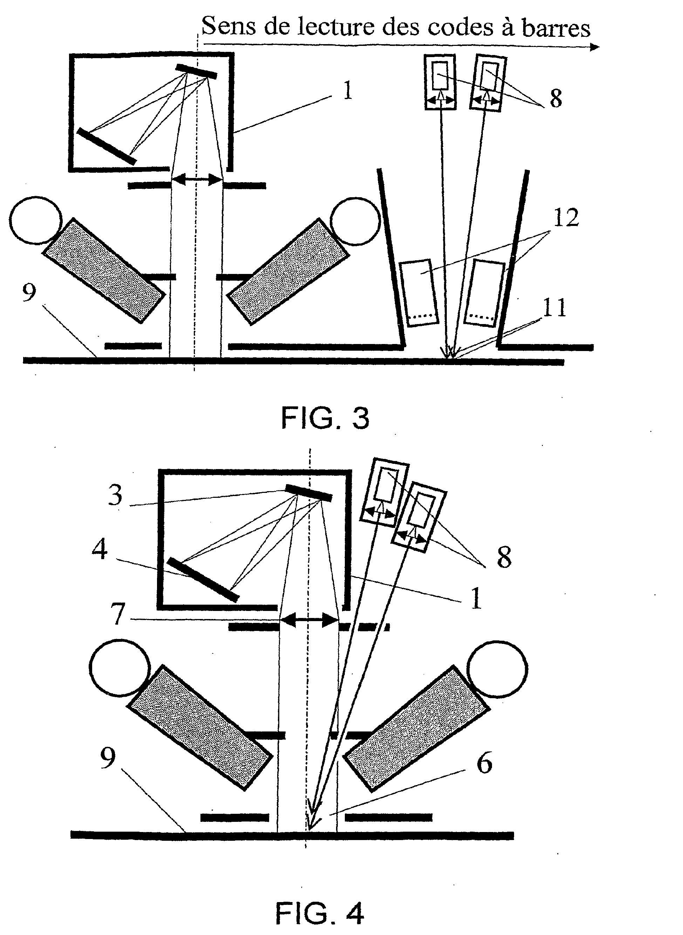

La Figure 4 illustre un spectrophotomètre à géométrie 45/0°, avec un analyseur spectral à réseau de diffraction et barrette (1) muni de deux diodes laser (8). Le document est éclairé par l'ouverture de mesure (6) et la lumière réfléchie est détectée par l'analyseur spectral (1)

Si l'analyseur spectral utilise une tourelle porte filtre en rotation, lors de la lecture du code à barres la tourelle positionne un filtre passe-bande, adapté à la transmission de la longueur d'onde lumineuse de la diode laser utilisée, vers l'élément photosensible destiné normalement à l'analyse spectrale. L'usage de diodes laser supplémentaires de couleur distinctes pour la lecture de codes à barre couleur nécessite l'usage d'éléments photosensibles filtrés.

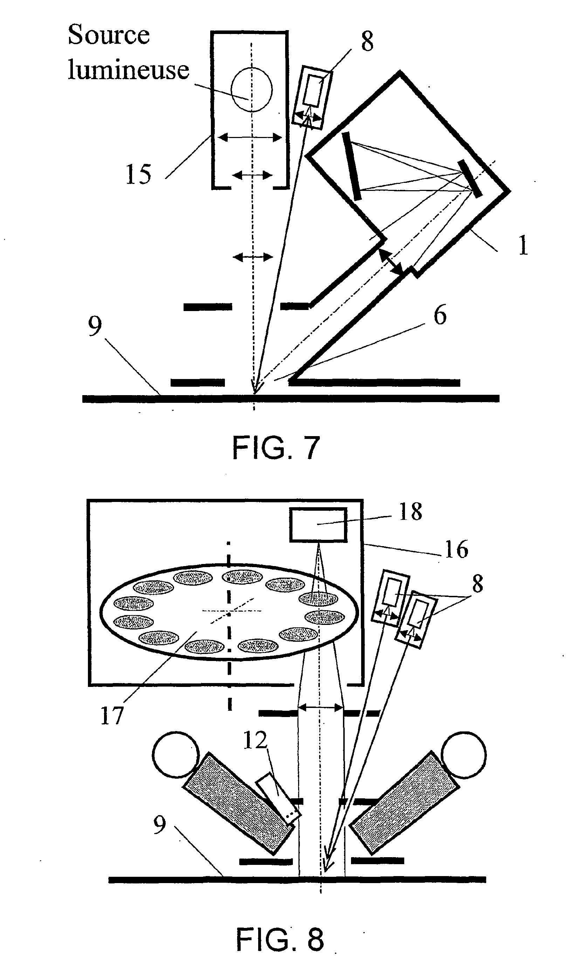

La Figure 8 illustre un spectrophotomètre à géométrie 45/0°, avec un analyseur spectral à filtres passe bande (16), muni de deux diodes laser (8) et d'un d'élément photosensible (18). Le document est éclairé par l'ouverture de mesure (6) et la lumière réfléchie est détectée par l'élément photosensible (18) et par un élément sensible complémentaire (12) filtré à la longueur d'onde adaptée à l'une des deux diodes laser.

Dans les deux cas précédents le signal électrique produit par le(s) capteur(s) photosensible(s) est traité par les méthodes usuelles d'amplification, digitalisation et décodage qu'on trouve sur tout système classique de lecteur de codes à barres, au besoin par usage des circuits intégrés électroniques spécialisés disponibles dans le commerce.

L'emploi des spots lumineux très fins est destiné à la lecture des codes à barres pour l'utilisation du spectrophotomètre en tant qu'instrument de mesures des densités par réflexion. En effet certaines machine de production telles que les rotatives offset utilisées pour l'impression des quotidiens ne permettent pas la coupe des marges où sont imprimées les gammes de contrôle, et demandent donc de préférence un contrôle des densités d'encres primaires sur des plages colorées de petites dimensions, pour ne pas trop envahir le document.

Le (ou les) spot(s) lumineux très fins prévus pour la lecture des codes à barres peu(ven)t être utilisé(s) pour la réalisation de mesures spectrales après étalonnage sur la céramique du spectrophotomètre, de manière peu orthodoxe quand on considère la géométrie d'éclairement et la réponse spectrale non normalisées ainsi réalisées, mais qui reste intéressante si les densités ainsi obtenues ne sont pas utilisées en tant que mesures absolues mais seulement en comparaison par rapport à des valeurs de références acquises dans les mêmes conditions de mesure.

La visée de la plage de petite dimension à mesurer peut être réalisée à l'aide d'un réticule percé d'un trou indépendant du corps de l'Appareil.

L'adjonction bien adaptée au spectrophotomètre de la (ou des) diodes laser et de leur(s) optique(s) associée(s), ou de toute autre source lumineuse, infrarouge ou ultraviolette (lumière blanche, diode(s) électroluminescente(s)) produisant un spot lumineux de dimension adaptée sur le document, d'une manière autorisant la lecture des codes à barres tout en utilisant l'ouverture de mesure prévue pour les mesures spectrales, dépend bien entendu de la géométrie de mesure du spectrophotomètre et du couplage optique de l'analyseur spectral à l'illuminateur.

Le spectrophotomètre lecteur de codes à barres ainsi réalisé peut être utilisé en mode manuel (déplacement manuel le long d'une règle) ou automatique (déplacement sur un rail pour lecture en bordure du document ou déplacement sur une table de mesure XY).

Pour simplifier l'emploi manuel du spectrophotomètre lors du contrôle qualité d'un document, et pour éviter tout danger pour les yeux dû à l'usage possible d'un ou plusieurs rayons laser, un dispositif permet qu'un même bouton poussoir soit utilisé pour l'usage du spectrophotomètre en mesure de la (ou des) gammes (s) de contrôle par balayage et en lecture du code à barres associé à la (ou aux) gamme(s) de contrôle, et ceci par les moyens suivants :
- un appui bref sur le bouton permet la mesure manuelle d'une seule plage colorée.
- un appui maintenu sur le bouton déclenche la mise en marche du mode de mesures spectrales continues par balayage, permettant l'acquisition usuelle d'une ligne de plages colorées par déplacement manuel guidé par une règle.
- mais dans ce dernier cas la détection d'une séquence arbitraire de plages colorées successives en début de mesure d'une ligne (par exemple noir - blanc - noir - blanc -noir ) déclenche automatiquement le passage du spectrophotomètre en mode de lecture de code à barres, par extinction de son illuminateur standard et allumage de sa (ou ses) diodes pour codes à barres. Une zone non imprimée (zone de silence du code à barres) doit bien sûr être prévue entre la fin de la séquence de couleurs arbitraires spéciale, commutant l'usage du spectrophotomètre, et la première barre imprimée du code à barres.

En pratique deux boutons poussoirs placés de part et d'autre du corps de l'Appareil et fonctionnant en parallèle permettent un usage commode par les gauchers et par les droitiers.

Enfin, pour permettre à tout Utilisateur non équipé de l'Appareil de contrôle, mais équipé d'autres instruments de mesures (Spectrophotomètre, colorimètre, ou densitomètre) d'enrichir la base de données mondiale, ou de lire le(s) code(s) à barres couleur rencontrés sur un document, un dispositif de lecteur de code à barres couleur est proposé. Ceci permettra d'étendre l'utilisation de la base de données mondiale au contrôle des plaques offset, avec les densitomètres opérant par prise de vue numérique et traitement d'image pour la détermination directe des surfaces tramées géométriques, au contrôle des films tramés utilisés en Arts Graphiques et plus généralement à tous les contrôles nécessitant de faire appel à des instruments autres que l'Appareil de contrôle, tels que des densitomètres ou spectrophotomètres par transmission, des densitomètres pour la flexographie etc., les codes à barres couleur étant au besoin reportés sur des étiquettes autocollantes.

## Revendications

1. Procédé permettant une assurance de la qualité colorimétrique d'un document issu d'une machine de production et comportant une gamme de contrôle, **caractérisé en ce qu'**il comprend les étapes suivantes :
a) le choix arbitraire d'au moins les données suivantes :
i) au moins une gamme de contrôle ;
ii) des valeurs de référence, théoriques, à mesurer sur ladite au moins une gamme de contrôle ;
iii) des tolérances d'acceptabilité ; et
iv) des informations liées aux conditions de mesure des valeurs ii) et iii) ;
b) l'enregistrement des données a)i) à a)iv) et leur codage sous la forme d'un identificateur unique ;
c) l'incorporation dans le document dudit identificateur unique, sous toute forme de codage ou de représentation arbitraire ;
d) la lecture dudit identificateur unique sur ledit document aux fins d'identifier lesdites données a)i) à a)iv) ;
e) la mesure des valeurs de référence réelles de la gamme de contrôle du document, dans les conditions telles que définies en a)iv) ;
f) la comparaison entre lesdites valeurs réelles et celles, théoriques, définies en a)ii), en tenant compte des tolérances telles que définies en a)iii) aux fins de vérifier la qualité colorimétrique du document.

2. Procédé selon la revendication 1, **caractérisé en ce que** des informations quant à la configuration de la machine de production sont également choisies, enregistrées et codées par ledit identificateur unique.

3. Procédé selon la revendication 1 ou 2, **caractérisé en ce que** le choix de tout ou partie des données a) i) à a)iv) se fait parmi des données prédéfinies de gammes de contrôle conçues par des organismes publics ou privés.

4. Procédé selon l'une quelconque des revendications 1 à 3, **caractérisé en ce que** lesdites valeurs de référence de l'étape a) ii) sont les valeurs spectrales, colorimétriques ou densitométriques.

5. Procédé selon la revendication 4, **caractérisé en ce que** les informations liées aux conditions de mesure de l'étape a)iv) sont l'illuminant utilisé, l'angle de vision pour le calcul colorimétrique, la réponse spectrale pour les calculs densitométriques, le type et la marque de l'appareil utilisé pour cette mesure, le filtrage optique, la géométrie de mesure.

6. Procédé selon l'une quelconque des revendications précédentes, **caractérisé en ce que** l'enregistrement et le codage desdites données de l'étape b) se fait sur une base de données et **en ce que** l'identification des données se fait par connexion à ladite base, ledit identificateur unique étant un index de ladite base.

7. Procédé selon la revendication 6, **caractérisé en ce que** ladite base de données est accessible par connexion à un réseau informatique de type internet ou par un serveur local intranet ne stockant que les données nécessaires ou par connexion usuelle de type filaire, hertzienne ou infrarouge.

8. Procédé selon l'une quelconque des revendications précédentes, **caractérisé en ce qu'**il comprend une étape de transformation dudit identificateur unique en code à barres.

9. Procédé selon la revendication 8, **caractérisé en ce que** l'étape de transformation se fait par calcul et transmission d'une image bitmap ou vectorielle du code à barres selon un codage arbitraire et sous toute forme de fichier informatique, ou par transmission de l'identificateur unique lui-même, sous toute forme de codage ou de représentation arbitraire permettant à un programme informatique local d'imprimer cet identificateur sous forme d'un code à barres.

10. Procédé selon l'une des revendications 8 ou 9, **caractérisé en ce que** le code à barres est un code à barres linéaire monochrome ou en couleur.

11. Procédé selon l'une quelconque des revendications précédentes, **caractérisé en ce que** l'étape c) se fait par incorporation, audit document, dudit identificateur unique, par un programme informatique participant à la réalisation du document, en vue de sa reproduction au côté de la au-moins-une gamme de contrôle.

12. Procédé selon l'une quelconque des revendications 8 à 10, **caractérisé en ce que** la lecture dudit code à barres est réalisée au moyen d'un spectrophotomètre modifié pour permettre une lecture par balayage de ladite gamme de contrôle et dudit code à barres.

13. Spectrophotomètre pour la mise en oeuvre du procédé selon la revendication 12, **caractérisé en ce que** ledit spectrophotomètre comprend :
- un analyseur spectral de lumière (1) comportant une ouverture d'entrée de lumière (2) ;
- un illuminateur (5) destiné à éclairer ledit document produit sur une partie de sa surface ;
- une ouverture de mesure (6) définissant la zone illuminée du document dont le spectre de réflexion est mesuré ainsi que le code à barres ;
- une liaison optique (7) transmettant la lumière réfléchie par la plage colorée illuminée à l'analyseur spectral ;
- une électronique spécialisée, ou logiciel, corrigeant le spectre brut mesuré par balayage, sur chaque bande de longueurs d'onde mesurée, par mesure en l'absence de lumière et mesure d'un étalon de spectre de réflexion connu ;
- au moins une source lumineuse et son optique de collimation (8) produisant un spot lumineux visible, infrarouge ou ultraviolet, de dimension et de longueur d'onde adaptées à la lecture des codes à barres, un élément photosensible (10), détectant la lumière réfléchie lors du balayage d'un code à barres ; et
- une électronique de traitement permettant la mise en forme et le décodage du signal recueilli lors du balayage d'un code à barres issu de l'étape de transformation selon la revendication 8.

14. Spectrophotomètre selon la revendication 13, **caractérisé en ce que** ledit analyseur spectral (1) ou l'ouverture de mesure (6) permet également la lecture du code à barres.

15. Spectrophotomètre selon la revendication 13, **caractérisé en ce que** ledit analyseur spectral de lumière (1) utilise un réseau de diffraction dispersant la lumière (3) et une barrette d'éléments photosensibles (4) mesurant l'intensité de la lumière diffractée sur chaque bande de longueurs d'onde visibles et proche du visible.

16. Spectrophotomètre selon la revendication 13, **caractérisé en ce que** ledit analyseur spectral de lumière est un analyseur spectral à filtres (16) utilisant, pour la mesure des spectres lumineux, un jeu de filtres à bande étroite montés sur une tourelle en rotation (17) devant un élément photosensible (18) mesurant chaque bande du spectre lumineux à travers les filtres successifs lors de la rotation de la tourelle, la lecture d'un code à barres monochrome étant réalisée à l'aide d'un spot d'une seule longueur d'onde, la tourelle positionnant un filtre passe bande adapté pour la lecture du code à barres par l'élément photosensible existant (18), ou la lecture de codes à barres étant faite par utilisation d'élément(s) photosensible(s) filtré(s) aux longueurs d'onde de la au moins une source lumineuse (12).

17. Spectrophotomètre selon l'une des revendications 13 à 16, **caractérisé en ce que** l'illuminateur est un illuminateur de géométrie normalisée 45/0° (5) ou 0/45° (15)_{.}

18. Spectrophotomètre selon l'une des revendications 13 à 16, **caractérisé en ce que** l'illuminateur est un illuminateur à sphère de géométrie normalisée de type Diffus/0° (13) ou 0°/Diffus (14).

19. Spectrophotomètre selon l'une quelconque des revendications 13 à 18, **caractérisé en ce que** ladite au-moins-une source lumineuse est une diode électroluminescente focalisées sur le plan du document.

20. Spectrophotomètre selon l'une quelconque des revendications 13 à 18, **caractérisé en ce qu'**il est associé à une diode laser pour la lecture de codes à barres linéaires monochromes.

21. Spectrophotomètre selon l'une quelconque des revendications 13 à 18, **caractérisé en ce qu'**il est associé à plusieurs diodes laser de longueurs d'onde distinctes pour la lecture des codes à barres en couleur.

22. Spectrophotomètre selon l'une des revendications 20 ou 21, **caractérisé en ce que** les diodes laser et optiques associées produisent des spots lumineux distincts ou confondus.

23. Spectrophotomètre selon l'une des revendications 13 à 22, **caractérisé en ce qu'**il peut être utilisé en mode manuel ou en mode automatique.

24. Spectrophotomètre selon l'une quelconque des revendications 13 à 23, **caractérisé en ce que**, pour une utilisation en mode manuel, un bouton permet :
- par un appui bref d'effectuer la mesure d'une seule plage colorée ; ou
- par un appui maintenu de déclencher la mise en marche du mode de mesures spectrales continues par balayage, la détection d'une séquence arbitraire de plages colorées successives en début de mesure d'une ligne déclenchant automatiquement le passage du spectrophotomètre en mode de lecture de code à barres, par extinction de l'illuminateur et allumage de la (ou des) diode(s).

25. Spectrophotomètre selon la revendication 22, **caractérisé en ce que** le (les) spot(s) lumineux prévu(s) pour la lecture des codes à barres sont confondus dans le plan du document reproduit ce qui permet des mesures spectrales sur des plages colorées de très petites dimensions, après étalonnage sur une céramique.

26. Spectrophotomètre selon l'une quelconque des revendications 13 à 25, **caractérisé en ce qu'**il comprend un dispositif d'affichage délivrant des indications telles que le début et la fin des mesures, le décodage d'un code à barres réussi ou non, l'interrogation en cours d'une base de données distante, l'acceptation ou le rejet d'un document.

27. Spectrophotomètre selon la revendication 26, **caractérisé en ce que** ledit dispositif d'affichage est à cristaux liquides ou diode électroluminescente.

28. Spectrophotomètre selon l'une quelconque des revendication 13 à 27, **caractérisé en ce qu'**il comprend un microprocesseur permettant de gérer les boutons de commande de l'appareil, l'extinction et l'allumage des différentes sources lumineuses, l'électronique de traitement et de décodage des codes à barres, la réalisation de tous les calculs à partir des données acquises, les communications avec des ordinateurs externes, les dispositifs d'affichage.

## Claims

1. A method for ensuring the colorimetric quality of a document output by a production machine and including a control range, **characterized in that** it comprises the following steps:
a) the arbitrary choice of at least the following data:
i) at least one control range,
ii) theoretical reference values to be measured over said at least one control range,
iii) acceptability tolerances and
iv) information relating to the conditions for measuring the ii) and iii) values;
b) the recording of the data a)i) to a)iv) and their coding in the form of a unique identifier; and
c) the incorporation into the document, of said unique identifier, in any arbitrary representational or coding form;
d) the reading of said unique identifier on said document, to identify said data a)i) to a)iv);
e) the measuring, under the conditions as defined in a)iv), actual reference values of the control range of the document;
f) the comparison of said actual values with those theoretical values defined in a)ii), taking into account the tolerances as defined in a)iii), in order to verify the colorimetric quality of the document.

2. The method as claimed in claim 1, **characterized in that** information regarding the configuration of the production machine is also chosen, recorded and coded by said unique identifier.

3. The method as claimed in claim 1 or 2,
**characterized in that** the choice of all or part of the data a)i) to a)iv) is made from predefined data of control ranges devised by public or private organizations.

4. The method as claimed in any one of claims 1 to 3, **characterized in that** said reference values of step a)ii) are spectral, colorimetric or densitometric values.

5. The method as claimed in claim 4, **characterized in that** the information associated with the measurement conditions of step a)iv) are the illuminant used, the viewing angle for the colorimetric calculation, the spectral response for the densitometric calculations, the type and brand of the apparatus used for this measurement, the optical filtering and the measurement geometry.

6. The method as claimed in any one of the preceding claims, **characterized in that** the recording and the coding of said data of step b) take place on a database and **in that** the data is identified by connection to said database, said unique identifier being an index of said database.

7. The method as claimed in claim 6, **characterized in that** said database is accessible by linking to an Internet-type computer network or via a local Intranet server storing only the necessary data, or via a standard wire, radio or infrared link.

8. The method as claimed in any one of the preceding claims, **characterized in that** it includes a step of converting said unique identifier into a barcode.

9. The method as claimed in claim 8, **characterized in that** the conversion step is carried out by calculating and transmitting a bitmap or vector image of the barcode according to an arbitrary coding and in any form of computer file, or by transmitting the unique identifier itself, in any form of coding or arbitrary representation, allowing a local computer program to print this identifier in the form of a barcode.

10. The method as claimed claim 8 or 9, **characterized in that** the barcode is a monochrome or color, linear barcode.

11. The method as claimed in any one of the preceding claims, **characterized in that** step c) is carried out by incorporating, into said document, said unique identifier, by a computer program that contributes to the production of the document, with a view to its reproduction alongside the at least one control range.

12. The method as claimed in any one of claims 8 to 10, **characterized in that** said barcode is read by means of a modified spectrophotometer in order to allow reading by scanning said control range and said barcode.

13. A spectrophotometer for implementing the method as claimed in claim 12, **characterized in that** said modified spectrophotometer comprises:
- a light spectrum analyzer (1) having a light entry aperture (2);
- an illuminator (5) designed to illuminate said document produced over part of its surface;
- a measurement aperture (6) defining the illuminated area of the document, the reflection spectrum of which is measured, as is the barcode;
- an optical link (7) transmitting the light reflected by the illuminated color area to the spectrum analyzer;
- a specialized electronic circuit, or software, which corrects the raw spectrum measured by scanning, over each measured wavelength band, by measuring in the absence of light and by measuring a known reflection spectrum standard;
- at least one light source and its collimation optic (8), producing a visible, infrared or ultraviolet light spot whose size and wavelength are matched to the reading of the barcodes, and a photosensitive element (10) that detects the reflected light when a barcode is being scanned; and
- an electronic processing circuit for shaping and decoding the received signal when a barcode, resulting from the step of converting of claim 8, is scanned.

14. The spectrophotometer as claimed in claim 13, **characterized in that** said spectrum analyzer (1) or said measurement aperture (6) also allows the barcode to be read.

15. The spectrophotometer as claimed in claim 13, **characterized in that** said light spectrum analyzer (1) uses a diffraction grating (3) and a linear array of photosensitive elements (4) measuring the intensity of the diffracted light over each visible and near-visible wavelength band.

16. The spectrophotometer as claimed in claim 13, **characterized in that** said light spectrum analyzer is a filter spectrum analyzer (16) using, for measuring the light spectra, a set of narrow-band filters mounted on a revolving turret (17) passed a photosensitive element (18) that measures each band of the light spectrum through the successive filters as the turret revolves, a monochrome barcode being read by means of a spot of a single wavelength, the turret positioning a bandpass filter suitable for reading the barcode by the existing photosensitive element (18), or the barcode being read by using one or more photosensitive elements filtered at the wavelengths of the at least one light source (12).

17. The spectrophotometer as claimed in one of the claims 13 à 16, **characterized in that** the illuminator is an illuminator of 45/0° (5) or 0/45° (15) standardized geometry.

18. The spectrophotometer as claimed in one of the claims 13 to 16, **characterized in that** the illuminator is an integrating sphere illuminator with a standardized geometry of the diffuse/0° (13) or 0°/diffuse (14) type.

19. The spectrophotometer as any one of claims 13 to 18, **characterized in that** said at least one light source is a light-emitting diode focused onto the plane of the document.

20. The spectrophotometer as claimed in any one of claims 13 to 18, **characterized in that** it is combined with a diode laser for reading monochrome linear barcodes.

21. The spectrophotometer as claimed in any one of claims 13 to 18, **characterized in that** it is combined with several diode lasers of different wavelengths for reading color barcodes.

22. The spectrophotometer as claimed in claim 20 or 21, **characterized in that** the diode lasers and the associated optics produce separate or merged light spots.

23. The spectrophotometer as claimed in one of claims 13 to 22, **characterized in that** it can be used in manual mode or in automatic mode.

24. The spectrophotometer as claimed in any one of claims 13 to 23, **characterized in that,** for use in manual mode, a pushbutton makes it possible:
- by pushing briefly, to measure a single color area; or
- by maintained pressure, to initiate the operation of the continuous spectral measurement mode by scanning, the detection of an arbitrary sequence of successive color areas at the start of measurement of a line automatically causing the spectrophotometer to switch to barcode read mode, by turning off the illuminator and turning on the diode laser(s).

25. The spectrophotometer as claimed in claim 22, **characterized in that** the light spot(s) provided for reading barcodes are merged in the plane of the document reproduced, allowing spectral measurements over color areas of very small size, after calibration on a ceramic.

26. The spectrophotometer as claimed in any one of claims 13 to 25, **characterized in that** it includes a display device that delivers indications such as the start and end of the measurements, the successful or unsuccessful decoding of a barcode, the current interrogation of a remote database, and the acceptance or rejection of a document.

27. The spectrophotometer as claimed in claim 25, **characterized in that** the display device is a liquid-crystal or light-emitting diode device.

28. The spectrophotometer as claimed in any one of claims 13 to 27, **characterized in that** it includes a microprocessor for managing the control buttons of the apparatus, the turning-off and turning-on of the various light sources, the processing electronics, the barcode decoding electronics, all the calculations based on the acquired data, the communications with external computers, and the display devices.

## Patentansprüche

1. Verfahren zur Sicherstellung der kolorimetrischen Qualität eines von einer Produktionsmaschine kommenden Dokuments mit einer Kontrollskala, **dadurch gekennzeichnet, dass** es die folgenden Schritte umfasst:
a) die willkürliche Auswahl mindestens der folgenden Daten:
i) mindestens eine Kontrollskala;
ii) theoretische Bezugswerte, die auf der mindestens einen Kontrollskala zu messen sind;
iii) Akzeptanztoleranzen; und
iv) mit den Bedingungen der Messung der Werte ii) und iii) verbundene Informationen;
b) die Aufzeichnung der Daten a)i) bis a)iv) und ihre Codierung in der Form eines einmaligen Identifizierungsmerkmals;
c) die Eingliederung dieses einmaligen Identifizierungsmerkmals in das Dokument in jeder beliebigen Form von Codierung oder willkürlicher Darstellung;
d) das Lesen dieses einmaligen Identifizierungsmerkmals auf dem Dokument zum Zweck der Identifizierung der Daten a)i) bis a)iv);
e) die Messung der tatsächlichen Bezugswerte der Kontrollskala des Dokuments unter den in a)iv) definierten Bedingungen;
f) der Vergleich zwischen den tatsächlichen Werten und den unter a)ii) definierten theoretischen Werten unter Berücksichtigung der unter a)iii) definierten Toleranzen zum Zweck der Verifizierung der kolorimetrischen Qualität des Dokuments.

2. Verfahren nach Anspruch 1, **dadurch gekennzeichnet, dass I**nformationen hinsichtlich der Konfiguration der Produktionsmaschine ebenfalls ausgewählt, aufgezeichnet und durch das einmalige Identifizierungsmerkmal codiert werden.

3. Verfahren nach Anspruch 1 oder 2, **dadurch gekennzeichnet, dass** die Auswahl aller Daten a)i) bis a)iv) oder eines Teils davon aus vordefinierten Kontrollskalendaten stattfindet, die von öffentlichen oder privaten Organen erstellt wurden.

4. Verfahren nach einem der Ansprüche 1 bis 3, **dadurch gekennzeichnet, dass** die Bezugswerte des Schritts a)ii) die spektralen, kolorimetrischen oder densitometrischen Werte sind.

5. Verfahren nach Anspruch 4, **dadurch gekennzeichnet, dass** die mit den Messbedingungen des Schritts a)iv) verbundenen Informationen die verwendete Lichtart, der Blickwinkel für die kolorimetrische Berechnung, die spektrale Antwort für die densitometrischen Berechnungen, der Typ und die Marke des für diese Messung verwendeten Geräts, die optische Filterung, die Messgeometrie sind.

6. Verfahren nach einem der vorhergehenden Ansprüche, **dadurch gekennzeichnet, dass** die Aufzeichnung und die Codierung der Daten des Schritts b) auf einer Datenbasis stattfindet und dass die Identifizierung der Daten durch Verbindung mit der Datenbasis stattfindet, wobei das einmalige Identifizierungsmerkmal ein Index der Basis ist.

7. Verfahren nach Anspruch 6, **dadurch gekennzeichnet, dass** die Datenbasis durch Verbindung mit einem Informatiknetz vom Typ Internet oder durch einen örtlichen Intranetserver, der nur die erforderlichen Daten speichert, oder durch herkömmliche Draht-, Funk- oder Infrarotverbindung zugänglich ist.

8. Verfahren nach einem der vorhergehenden Ansprüche, **dadurch gekennzeichnet, dass** es einen Schritt der Umwandlung des einmaligen Identifizierungsmerkmals in einen Strichcode umfasst.

9. Verfahren nach Anspruch 8, **dadurch gekennzeichnet, dass** der Umwandlungsschritt durch Berechnung und Übertragung eines Bitmap-Bilds oder vektoriellen Bilds des Strichcodes gemäß einer willkürlichen Codierung und unter jeder beliebigen Informatikdateiform oder durch Übertragung des einmaligen Identifizierungsmerkmals selbst in jeder beliebigen Form von Codierung oder willkürlicher Darstellung stattfindet, die einem örtlichen Informatikprogramm gestattet, dieses Identifizierungsmerkmal in Form eines Strichcodes zu drucken.

10. Verfahren nach einem der Ansprüche 8 oder 9, **dadurch gekennzeichnet, dass** der Strichcode ein monochromer oder farbiger Strichcode ist.

11. Verfahren nach einem der vorhergehenden Ansprüche, **dadurch gekennzeichnet, dass** der Schritt c) durch Eingliederung des einmaligen Identifizierungsmerkmals in das Dokument durch ein an der Herstellung des Dokuments beteiligtes Informatikprogramm zum Zweck seiner Wiedergabe neben der mindestens einen Kontrollskala stattfindet.

12. Verfahren nach einem der Ansprüche 8'bis 10, **dadurch gekennzeichnet, dass** das Lesen des Strichcodes mit Hilfe eines Spektrofotometers vorgenommen wird, das modifiziert ist, um eine Lesung durch Abtastung der Kontrollskala und des Strichcodes zu gestatten.

13. Spektrofotometer zur Durchführung des Verfahrens nach Anspruch 12, **dadurch gekennzeichnet, dass** das Spektrofotometer umfasst:
- einen Lichtspektralanalysator (1) mit einer Lichteintrittsöffnung (2);
- einen Ausleuchter (5), der dazu bestimmt ist, das auf einem Teil seiner Oberfläche erzeugte Dokument zu beleuchten;
- eine Messöffnung (6), die die ausgeleuchtete Zone des Dokuments definiert, deren Reflexionsspektrum gemessen wird sowie der Strichcode;
- eine optische Verbindung (7), die das von dem beleuchteten farbigen Bereich reflektierte Licht zu dem Spektralanalysator überträgt;
- eine spezialisierte Elektronik oder Software, die das durch Abtastung gemessene Rohspektrum auf jedem gemessenen Wellenlängenband durch Messung bei Fehlen von Licht und Messung eines Reflexionsspektrumsstandards korrigiert;
- mindestens eine Lichtquelle und ihre Kollimationsoptik (8), die einen Lichtfleck mit sichtbarem Licht, Infrarot oder Ultraviolett erzeugt, dessen Abmessung und Wellenlänge für die Lesung der Strichcodes ausgelegt sind, ein lichtempfindliches Element (10), das das bei der Abtastung eines Strichcodes reflektierte Licht erfasst; und
- eine Verarbeitungselektronik, die die Formung und die Decodierung des Signals, das bei der Abtastung eines aus dem Umwandlungsschritt nach Anspruch 8 stammenden Strichcodes empfangen wird.

14. Spektrofotometer nach Anspruch 13, **dadurch gekennzeichnet, dass** der Spektralanalysator (1) oder die Messöffnung (6) auch die Lesung des Strichcodes gestattet.

15. Spektrofotometer nach Anspruch 13, **dadurch gekennzeichnet, dass** der Lichtspektralanalysator (1) ein Beugungsgitter verwendet, das das Licht (3) streut, und eine Leiste von lichtempfindlichen Elementen (4), die die Stärke des gebeugten Lichts auf jedem Band von sichtbaren oder dem Sichtbaren nahen Wellenlängen misst.

16. Spektrofotometer nach Anspruch 13, **dadurch gekennzeichnet, dass** der Lichtspektralanalysator ein Filter-Spektralanalysator (16) ist, der bei der Messung der Lichtspektren einen Satz von Schmalbandfiltern verwendet, die auf einer Drehscheibe (17) montiert sind, die sich vor einem lichtempfindlichen Element (18) dreht, das jedes Band des Lichtspektrums durch die bei der Drehung der Drehscheibe aufeinanderfolgenden Filter misst, wobei die Lesung eines monochromen Strichcodes mit Hilfe eines Flecks von einer einzigen Wellenlänge vorgenommen wird, wobei die Drehscheibe ein Passbandfilter in Position bringt, das für die Lesung des Strichcodes durch das bestehende lichtempfindliche Element (18) ausgelegt ist, oder die Lesung von Strichcodes wird durch Verwendung eines (von) gefilterten lichtempfindlichen Elements (Elementen) bei den Wellenlängen der mindestens einen Lichtquelle (12) vorgenommen.

17. Spektrofotometer nach einem der Ansprüche 13 bis 16, **dadurch gekennzeichnet, dass** der Ausleuchter ein Ausleuchter mit genormter Geometrie 45/0° (5) oder 0/45° (15) ist.

18. Spektrofotometer nach einem der Ansprüche 13 bis 16, **dadurch gekennzeichnet, dass** der Ausleuchter ein Kugelausleuchter mit genormter Geometrie vom Typ Diffus/0° (13) oder 0°/Diffus (14) ist.

19. Spektrofotometer nach einem der Ansprüche 13 bis 18, **dadurch gekennzeichnet, dass** die mindestens eine Lichtquelle eine auf die Ebene des Dokuments fokussierte Elektrolumineszenzdiode ist.

20. Spektrofotometer nach einem der Ansprüche 13 bis 18, **dadurch gekennzeichnet, dass** es einer Laserdiode für die Lesung von monochromen linearen Strichcodes zugeordnet ist.

21. Spektrofotometer nach einem der Ansprüche 13 bis 18, **dadurch gekennzeichnet, dass** es mehreren Laserdioden mit verschiedenen Wellenlängen für die Lesung von Farbstrichcodes zugeordnet ist.

22. Spektrofotometer nach einem der Ansprüche 20 oder 21, **dadurch gekennzeichnet, dass** die Laserdioden und zugeordneten Optiken getrennte oder zusammenfallende Lichflecke erzeugen.

23. Spektrofotometer nach einem der Ansprüche 13 bis 22, **dadurch gekennzeichnet, dass** es im manuellen Modus oder im automatischen Modus verwendet werden kann.

24. Spektrofotometer nach einem der Ansprüche 13 bis 23, **dadurch gekennzeichnet, dass** bei einer Verwendung im manuellen Modus ein Knopf gestattet:
- durch einen kurzen Druck die Durchführung der Messung eines einzigen farbigen Bereichs; oder
- durch einen anhaltenden Druck die Auslösung der Ingangsetzung des Modus der kontinuierlichen Spektralmessungen durch Abtastung, die Erfassung einer willkürlichen Sequenz von aufeinanderfolgenden farbigen Bereichen zu Beginn der Messung einer Linie, die automatisch den Übergang des Spektrofotometers in den Strichcodelesemodus durch Löschen des Ausleuchters und Einschalten der Diode (Dioden) auslöst.

25. Spektrofotometer nach Anspruch 22, **dadurch gekennzeichnet, dass** der (die) für die Strichcodelesung vorgesehene(n) Lichtfleck(e) in der Ebene des reproduzierten Dokuments zusammenfallen, was nach Eichung auf einer Keramik Spektralmessungen auf farbigen Bereichen von sehr kleinen Abmessungen gestattet.

26. Spektrofotometer nach einem der Ansprüche 13 bis 25, **dadurch gekennzeichnet, dass** es eine Anzeigevorrichtung umfasst, die Angaben liefert wie der Beginn und das Ende der Messungen, die erfolgreiche oder nicht erfolgreiche Decodierung eines Strichcodes, die laufende Abfrage einer entfernten Datenbasis, die Annahme oder die Zurückweisung eines Dokuments.

27. Spektrofotometer nach Anspruch 26, **dadurch gekennzeichnet, dass** die Anzeigevorrichtung eine Flüssigkristall- oder Elektrolumineszenzdioden-Vorrichtung ist.

28. Spektrofotometer nach einem der Ansprüche 13 bis 27, **dadurch gekennzeichnet, dass** es einen Mikroprozessor umfasst, der die Verwaltung der Bedienungsknöpfe des Geräts, der Ein- und Ausschaltung der verschiedenen Lichtquellen, der Elektronik zur Verarbeitung und zur Decodierung der Strichcodes, der Durchführung aller Rechnungen ausgehend von erfassten Daten, der Kommunikationen mit externen Rechnern, der Anzeigevorrichtungen gestattet.
